# EUROPÄISCHE PATENTSCHRIFT

(11) **EP 3 206 934 B1**
(45) Veröffentlichungstag und Bekanntmachung des Hinweises auf die Patenterteilung: **12.06.2019**
(21) Anmeldenummer: 16710131.0
(22) Anmeldetag: 10.03.2016
(51) Int. Cl.: B62B 1/00, B62B 1/12, B62B 5/06, A45C 3/04, A45C 5/14

(54) **BEHÄLTNIS**
CONTAINER
CONTENEUR

(30) Priorität: 29.06.2015 DE 102015110433
(43) Veröffentlichungstag der Anmeldung: 23.08.2017
(73) Patentinhaber: Wanzl Metallwarenfabrik GmbH, 89340 Leipheim (DE)
(72) Erfinder: STÖCKLE, Dieter, 89361 Landensberg (DE); RUF, Paul, 87745 Eppishausen (DE)
(86) Internationale Anmeldenummer: PCT/EP2016/055123
(87) Internationale Veröffentlichungsnummer: WO 2017/001063

(56) Entgegenhaltungen:
- EP-A1- 2 873 587
- WO-A1-2009/151348
- GB-A- 2 450 170
- US-A1- 2008 073 865

## Beschreibung

Die vorliegende Erfindung betrifft ein Behältnis, insbesondere einen Einkaufskorb, mit einem Boden und einer an den Boden anschließenden umlaufenden Seitenwandung, wobei Boden und Seitenwandung einen Innenbereich des Einkaufskorbs begrenzen und wobei der Einkaufskorb rollbar ausgeführt ist.

Aus dem Stand der Technik sind bereits derartige Behältnisse, insbesondere Einkaufskörbe bekannt, die mittels eines Ziehgriffes durch den Nutzer hinter sich her gezogen werden können.

So ist beispielsweise aus der ES 2 352 776 B1 ein rollbarer Einkaufskorb bekannt, bei dem ein U-förmiger Ziehgriff in jeweils randseitigen Führungstunneln des Einkaufskorbs geführt und darin ausziehbar aufgenommen ist.

Des Weiteren ist aus der EP 1 834 539 A1 ein ziehbarer, rollbarer Einkaufskorb bekannt, bei dem ein u-förmiger Ziehgriff mit zwei Holmen in der Seitenwandung des Einkaufskorbes geführt und darin ausziehbar aufgenommen ist.

Aus der FR 2 906 212 B1 ist ein rollbarer Einkaufskorb bekannt, der einen Ziehgriff mit einer teleskopierbaren, mehrteiligen Führungsschiene aufweist, die ebenfalls in einem Führungsabschnitt des Einkaufskorbs aufgenommen und geführt ist.

Die EP 2 167 366 B1 offenbart einen rollbaren Einkaufskorb, bei dem am oberen Rand der Seitenwandung, die die Öffnung des Innenbereichs begrenzt, klappbar ein Ziehgriff befestigt ist. Dieser Ziehgriff kann von einer Ruheposition in eine Ziehposition verschwenkt werden, wobei in der Ziehposition der Ziehgriff vom Einkaufskorb absteht.

Ferner ist aus der WO 2014/118414 A1 ein rollbarer Einkaufskorb bekannt, der einen aufsteckbaren, U-förmigen Ziehgriff aufweist.

Die WO 2009/151348 A1 offenbart ein Behältnis gemäß dem Oberbegriff von Anspruch 1.

Es ist die Aufgabe der vorliegenden Erfindung, ein Behältnis der eingangs genannten Art in vorteilhafter Weise weiterzubilden, insbesondere dahingehend, dass die Montage des Ziehgriffs zum Behältnis vereinfacht, eine Mehrteiligkeit des Griffes nach Möglichkeit vermieden wird und nachträgliche Montageschritte entfallen können. Darüber hinaus soll eine Verringerung der Investitionskosten und eine Reduzierung der Herstellkosten erreicht werden.

Diese Aufgabe wird erfindungsgemäß gelöst durch ein Behältnis mit den Merkmalen des Anspruchs 1. Danach ist vorgesehen, dass ein Behältnis mit einem Boden und einer an den Boden anschließenden, umlaufenden Seitenwandung versehen ist, wobei Boden und Seitenwandung einen Innenbereich des Behältnisses begrenzen, wobei das Behältnis rollbar ausgeführt ist, wobei das Behältnis weiter einen Ziehgriff mit einer Führungsschiene und einen Handgriff aufweist und wobei in einem Bereich der Seitenwandung ein Führungstunnel für die Führung und wenigstens teilweisen Aufnahme der Führungsschiene des Ziehgriffs vorgesehen ist und wobei die Führungsschiene wenigstens ein Rastelement aufweist, das sich aus einer Außenfläche der Führungsscheine heraus erhebt und im montierten Zustand des Ziehgriffs ein vollständiges Herausziehen der Führungsschiene aus dem Führungstunnel verhindert.

Die Erfindung basiert auf dem Grundgedanken, ein Behältnis wie einen Einkaufskorb bzw. dessen Montage dahingehend zu vereinfachen, dass bei der Montage die Führungsschiene lediglich nur in den Führungstunnel eingesetzt werden muss und nach dem Einsetzen ein vollständiges Herausziehen der Führungsschiene durch das Vorsehen des wenigstens einen Rastelementes verhindert werden kann. Insbesondere kann der Führungstunnel bzw. Aufnahmetunnel am Behältnis bzw. Einkaufskorb für den Ziehgriff und die Ausführung des wenigstens einen Verrastungselements am Griff so konstruiert sein, dass die Montage des Ziehgriffes als Ganzes (einteilig oder mehrteilig) ermöglicht wird. Der Ziehgriff wird bei der Montage zwangsweise durch den Führungstunnel bzw. Aufnahmetunnel am Korb hindurchgedrückt und nach der Durchführung vor der Entnahme bzw. vor dem Herausziehen aus dem Führungstunnel gesichert, nämlich durch die Verrastung mittels des Rastelements. So kann sich beispielsweise die konvexe, außenliegende Tunnelwand temporär beim Einschieben des Ziehgriffes verformen und sobald das Rastelement des Griffes durch den Führungstunnel hindurchgetaucht ist, springt diese konvexe, außenliegende Tunnelwand wieder zurück und sperrt somit dauerhaft die Entnahme des Griffes.

Dadurch wird es möglich, eine Mehrteiligkeit des Griffes nach Möglichkeit entfallen zu lassen und auch nachträgliche Montageschritte zu vermeiden. Insbesondere ist eine Verringerung der Investitionskosten und eine Reduzierung der Herstellkosten möglich.

Grundsätzlich kann vorgesehen sein, dass das Behältnis stapelbar ausgeführt ist.

Des Weiteren kann vorgesehen sein, dass die Führungsschiene einstückig ausgeführt ist. Hierdurch wird die Herstellung der Führungsschiene vereinfacht.

Denkbar ist weiter, dass der Ziehgriff einstückig ausgeführt ist. Dadurch werden Montageschritte im Zusammenhang mit der Montage des Ziehgriffes vermieden, wodurch ebenfalls die Herstellung vereinfacht werden kann.

Grundsätzlich denkbar ist aber auch, dass der Ziehgriff und die Führungsschiene jeweils gesonderte Bauteile sind. Dies kann beispielsweise erforderlich sein, wenn der Ziehgriff erfahrungsgemäß großen Belastungen ausgesetzt ist und deshalb nach einer gewissen Lebensdauer der Ziehgriff ausgetauscht werden sollte. Eine Austauschbarkeit des Ziehgriffes ist in einer derartigen Ausführungsform, in der Ziehgriff und Führungsschiene jeweils gesonderte Bauteile sind, einfach möglich. Die Einzelteile des Ziehgriffs können miteinander verklebt, verschraubt und/oder verklipst werden.

Beispielsweise ist möglich, dass der Ziehgriff aus einem gesonderten Handgriff, einem Führungsprofil und einem Verrastteil, das durch den Führungstunnel hindurchgeführt wird und das Rastelement trägt, besteht. Der Handgriff und/oder das Verrastteil können als Kunststoffteile ausgeführt sein. Das Führungsprofil kann beispielsweise ein Kunststoffteil oder auch ein Metallbauteil sein, z.B. aus einem Aluminiumstrangpressprofil gefertigt sein.

Denkbar ist auch, den Ziehgriff aus zwei Halbschalen zu fertigen und diese durch z.B. Ultraschallschweißen oder Laserschweißen miteinander zu verbinden.

Insbesondere ist denkbar, dass Behältnis, Boden, Seitenwandung sowie Führungsschiene und Handgriff aus Kunststoff ausgeführt sind.

Dabei kann das Behältnis bzw. der Korb aus Polypropylen (PP), insbesondere unverstärktem Polypropylen ausgebildet sein. Denkbar ist auch, Polyethylen (PE), insbesondere unverstärktes Polyethylen zu verwenden.

Das Behältnis kann als Spritzgussteil ausgebildet sein.

Der Handgriff oder der Ziehgriff kann aus faserverstärktem Kunststoff bestehen. Denkbar ist beispielsweise, dass als Kunststoff ein Polyamid (PA) gewählt wird, beispielsweise PA6 oder PA66. Die Faserverstärkung kann beispielsweise durch Glasfaser erfolgen. Denkbar ist insbesondere, dass als Ausgangswerkstoff glasfaserverstärktes PA6 verwendet wird. Der Handgriff oder der Ziehgriff kann als Spritzgussteil ausgeführt sein.

Das Behältnis ist rollbar ausgeführt, wobei beispielsweise zwei Rollen vorgesehen sein, die z.B. bezogen auf den Fahrzustand des Behältnisses rückseitig angeordnet sein können. Die Achse der Rolle kann eine Achse aus Metall sein. Denkbar ist in diesem Zusammenhang, dass die Achse das einzige Bauelement aus Metall des Behältnisses ist.

Des Weiteren ist möglich, dass das Rastelement einstückig ausgebildet ist. Dadurch kann die Führungsschiene einfacher hergestellt werden und entsprechende Montageschritte können eingespart werden.

Ferner kann vorgesehen sein, dass das Rastelement keilförmig ausgebildet ist. In diesem Zusammenhang ist insbesondere denkbar, dass das Rastelement derart ausgerichtet ist, dass die Abflachung der Keilform des Rastelements in der Einsetzrichtung der Führungsschiene des Ziehgriffs orientiert ist, so dass beim Einsetzen des Ziehgriffs in den Führungstunnel das Rastelement aufgrund seiner Keilform den Führungstunnel entsprechend aufweitet und nach dem Hindurchtreten des Rastelements durch die Öffnung des Führungstunnels die Wandung des Führungstunnels wieder zurückspringt. Dadurch ist der Ziehgriff aufgrund der Form des Rastelements nicht mehr aus dem Führungstunnel herausziehbar, da der hervorspringende Teil des Rastelements ein Herausziehen aus dem Führungstunnel verhindert und der heraustretende Teil des keilförmigen Rastelements eine Art Anschlag bzw. Ansatz bildet, der gegen die Wand des Führungstunnels anschlägt und hierdurch ein Herausziehen verhindert.

Außerdem kann vorgesehen sein, dass die Führungsschiene zwei Breitseiten mit einer Breite aufweist, die jeweils doppelt so groß ist, wie die Tiefe der Führungsschiene. Denkbar ist beispielsweise, dass die Führungsschiene einen Querschnitt aufweist, der im Wesentlichen oval oder rechteckig ist. Dadurch wird ein vergleichsweise günstiges Flächenträgheitsmoment des Querschnitts erreicht, wodurch die Führungsschiene mechanisch stabil und auch vergleichsweise verwindungssteif sowie gegen durch Biegung in Richtung der Breitseiten gut geschützt ist. Ein derartiges Design erlaubt es auch, dass lediglich eine einzige Führungsschiene vorgesehen ist, die trotzdem eine ausreichende Stabilität bereitstellt. Weiter ist vorgesehen, dass das Rastelement auf einer Breitseite angeordnet ist. Dadurch wird es möglich, dass lediglich ein einziges Rastelement vorgesehen sein muss. Insbesondere ist weiter auch in diesem Zusammenhang möglich, dass das Rastelement derart angeordnet ist, dass die vom Rastelement ausgeübte Verformungskraft beim Einsetzen des Ziehgriffs in den Führungstunnel vergleichsweise gleichmäßig in die Wandungen des Führungstunnels eingeleitet werden kann. Ein schonendes Einsetzen des Ziehgriffs in den Führungstunnel wird hierdurch möglich.

Darüber hinaus ist vorgesehen, dass auf der Führungsschiene wenigstens ein Einrastelement vorgesehen ist, mittels dessen der Ziehgriff im montierten Zustand des Einkaufskorbs in einer ausgezogenen Position einrastbar ist. Durch den Umstand, dass der Ziehgriff im montierten Zustand des Einkaufskorbs in einer ausgezogenen Position einrastbar ist, ist es möglich, den Einkaufskorb nicht nur ziehen zu können, sondern diesen auch zu schieben. Dies kann beim Manövrieren des Einkaufskorbs von großem Vorteil sein, insbesondere dann, wenn man sich in engen Gassen innerhalb eines Einkaufsladens befindet. Durch das Vorsehen einer ausgezogenen Position, in der der Ziehgriff einrastbar ist, wird verhindert, dass beim Schieben des Behältnisses bzw. Einkaufskorbs der Ziehgriff in den Führungstunnel unabsichtlich hineingleitet und hierdurch wieder im Führungstunnel versenkt wird.

Insbesondere kann vorgesehen sein, dass das wenigstens eine Einrastelement gefedert angeordnet ist. Insbesondere kann vorgesehen sein, dass das Einrastelement auf einem Federsteg angeordnet ist. Dadurch wird es einfach möglich, den Ziehgriff aus der eingerasteten ausgezogenen Position wieder im Führungstunnel zu versenken, nämlich dadurch, dass der Federwiderstand überwunden wird. Insbesondere ist in diesem Zusammenhang denkbar, dass auf einer Breitseite der Führungsschiene jeweils an beiden Rändern parallel Federstege vorgesehen sind, auf denen jeweils ein Einrastelement angeordnet ist. Ein derartiges Einrastelement kann beispielsweise keilförmig ausgebildet sein.

Grundsätzlich ist auch denkbar, dass das Einrastelement in jedweder Ausgestaltung, ob gefedert oder nicht, keilförmig oder knopfförmig oder halbkugelförmig oder in anderer Weise geeignet geformt ausgebildet ist.

Des Weiteren kann vorgesehen sein, dass wenigstens ein weiteres Einrastelement vorgesehen ist, das ungefedert auf der Führungsschiene angeordnet ist. Denkbar ist insbesondere, dass das weitere ungefederte Einrastelement mittig auf einer Breitseite, insbesondere oberhalb des Rastelements, auf der Führungsschiene angeordnet ist. Durch die Anordnung auf der Breitseite ist es möglich, dass durch die Formgebung des Einrastelements eine Wandung des Führungstunnels elastisch beim Einschieben der Führungsschiene derart nach außen gedrückt wird, dass der Ziehgriff durch den Führungstunnel hindurchgleiten kann in die versenkte Position der Führungsschiene. In diesem Zusammenhang ist insbesondere denkbar, dass das Einrastelement zwei Schrägflächen aufweist, die das Herausziehen der Führungsschiene aus dem Führungstunnel sowie das Hereinschieben der Führungsschiene in den Führungstunnel erleichtern.

Außerdem ist vorgesehen, dass der Führungstunnel wenigstens eine Ausnehmung aufweist, in der das Einrastelement verrastbar ist. Durch die Ausnehmung kann ein Gegenstück bereitgestellt werden, in das das Rastelement eingreifen kann. Dadurch kann eine zuverlässige Verrastung einfach erreicht werden.

Weiter ist denkbar, dass der Führungstunnel wenigstens eine Ausformung aufweist, in der das Rastelement anschlagbar ist. Durch den Anschlag an z.B. einer Kante der

Ausformung kann einfach erreicht werden, dass im montierten Zustand des Ziehgriffs ein vollständiges Herausziehen der Führungsschiene aus dem Führungstunnel verhindert werden kann bzw. wird.

Des Weiteren kann vorgesehen sein, dass weiter ein auf den Ziehgriff auffädelbarer Aufsatz vorgesehen ist, mittels dessen ein Zusatzkorb gehalten werden kann. Durch den Zusatzkorb kann bei Bedarf eine größere Menge an Waren mit dem Behältnis transportiert werden, da weitere Waren in den Zusatzkorb eingelegt werden können.

Der Aufsatz weist beispielsweise zwei Tragarme auf, auf denen der Zusatzkorb gehalten werden kann. Der Aufsatz kann mit einem Aufsatzführungstunnel auf der Führungsschiene des Ziehgriffs geführt sein. Insbesondere kann vorgesehen sein, dass die Führungsschiene durch den Führungstunnel hindurchgeführt ist.

Außerdem kann weiter eine auf die Führungsschiene aufklipsbare Aufsatzschiene vorgesehen sein, mittels derer ein Zusatzkorb gehalten werden kann. Dadurch ist es einfach möglich, auch nachträglich bestehende Behältnisse dahingehend nachzurüsten, dass die Behältnisse mit Zusatzkörben versehen werden können.

Weitere Einzelheiten und Vorteile der Erfindung sollen nun anhand eines in den Zeichnungen dargestellten Ausführungsbeispiels näher erläutert werden.

Es zeigen:
- Fig. 1:: ein Ausführungsbeispiel eines erfindungsgemäßen Behältnisses, hier eines Einkaufskorbs, in perspektivischer Darstellung;
- Fig. 2:: eine perspektivische Rückansicht des Einkaufskorbs gemäß Fig. 1;
- Fig. 3:: eine Seitenansicht auf den Einkaufskorb gemäß Fig. 1;
- Fig. 4:: eine Schnittdarstellung durch den Einkaufskorb gemäß Fig. 1;
- Fig. 5:: eine Rückansicht auf den Einkaufskorb gemäß Fig. 1;
- Fig. 6:: eine Draufsicht auf den Einkaufskorb gemäß Fig. 1;
- Fig. 7:: eine perspektivische Ansicht auf den Boden des Einkaufskorbes gemäß Fig. 1;
- Fig. 8:: eine Draufsicht auf den Ziehgriff des Einkaufskorbs gemäß Fig. 1 mit Angabe der Schnitte A-A und B-B;
- Fig. 9:: eine Darstellung des Schnittes A-A durch den Ziehgriff des Einkaufskorbs gemäß Fig. 1;
- Fig. 10:: eine Darstellung des Schnittes B-B durch den Ziehgriff des Einkaufskorbs gemäß Fig. 1;
- Fig. 11a:: eine Frontansicht des Einkaufskorbs mit Angabe des Schnittes C-C;
- Fig. 11b:: eine Schnittdarstellung des Schnittes C-C und Draufsicht auf den Führungstunnel des Einkaufskorbs gemäß Fig. 1;
- Fig. 12:: eine Frontansicht auf ein weiteres Ausführungsbeispiel eines erfindungsgemäßen Einkaufskorbs;
- Fig. 13:: eine Seitenansicht auf den Einkaufskorb gemäß Fig. 12;
- Fig. 14:: eine Rückansicht auf den Einkaufskorb gemäß Fig. 12;
- Fig. 15:: eine weitere Frontansicht auf den Einkaufskorb gemäß Fig. 12 ohne Zusatzkorb;
- Fig. 16:: eine weitere Ansicht auf den Einkaufskorb gemäß Fig. 12 ohne Zusatzkorb, jedoch mit ausgezogenem Ziehgriff;
- Fig. 17:: eine Frontansicht auf ein weiteres Ausführungsbeispiel eines erfindungsgemäßen Einkaufskorbs;
- Fig. 18:: eine weitere Frontansicht auf den Einkaufskorb gemäß Figur 17 ohne Zusatzkorb;
- Fig. 19:: eine perspektivische Rückansicht auf den Einkaufskorb gemäß Figur 17;
- Fig. 20:: eine Rückansicht auf den Einkaufskorb gemäß Figur 17; und
- Fig. 21:: eine perspektivische Ansicht auf die Aufsatzschiene für das Ausführungsbeispiel gemäß Figur 17.

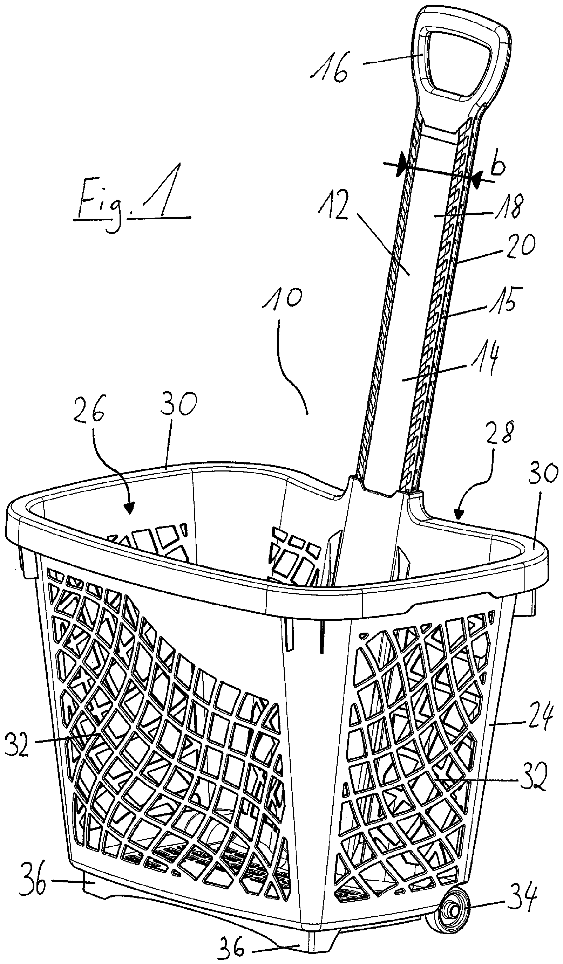

Figur 1 zeigt in perspektivischer Darstellung ein erfindungsgemäßes Behältnis 10 in der Ausführungsform als Einkaufskorb 10 mit einem Ziehgriff 12 im herausgezogenen Zustand.

Der Einkaufskorb 10 ist als Spritzgussteil ausgeführt, wobei der Einkaufskorb 10 aus unverstärktem Polypropylen ausgeführt ist.

Der Einkaufskorb 10 ist stapelbar.

Der Ziehgriff 12 weist eine Führungsschiene 14 und einen Handgriff 16 auf.

Grundsätzlich ist möglich, wie auch hier in diesem Ausführungsbeispiel, dass der Ziehgriff 12 einstückig ausgeführt ist.

Im hier gezeigten Ausführungsbeispiel ist der Ziehgriff 12 aus glasfaserverstärktem PA6 und als Spritzgussteil ausgeführt. An beiden Schmalseiten der Führungsschiene 14 sind Materialausnehmungen 15 vorgesehen. Diese Materialausnehmungen 15 dienen dazu, Materialanhäufungen zu vermeiden und die Herstellung im Spitzgussverfahren zu vereinfachen.

Alternativ ist aber auch möglich, dass der Handgriff 16 und die Führungsschiene 14 gesonderte Bauteile sind, die beispielsweise ineinandersteckbar ausgeführt sind.

Denkbar ist, dass der Handgriff 16 einstückig ausgeführt ist.

Die Führungsschiene 14 kann auch einstückig ausgeführt sind.

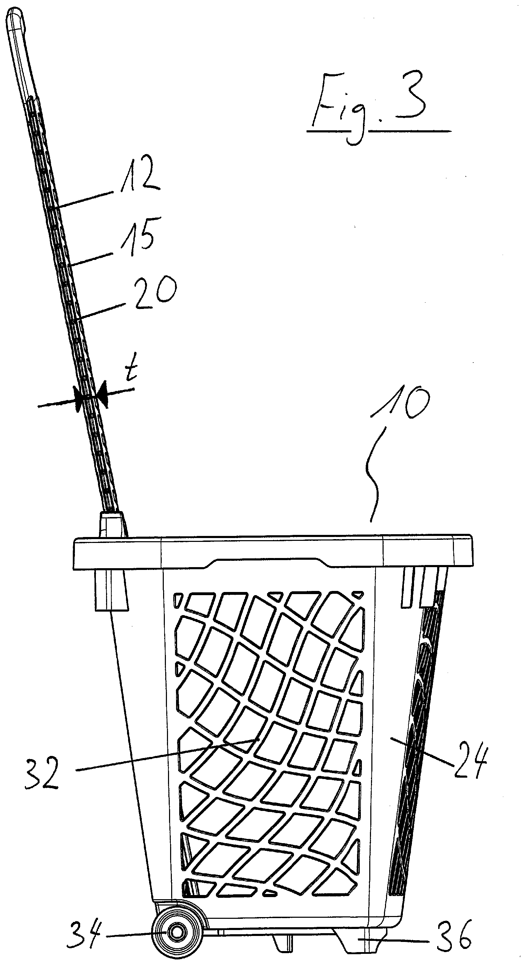

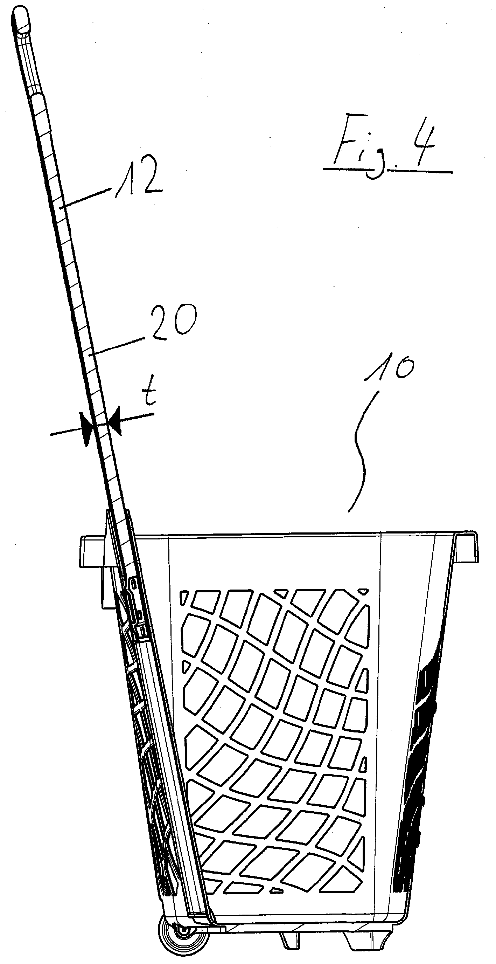

Der Querschnitt der Führungsschiene 14 ist dabei derart ausgestaltet, dass diese eine Breitseite 18 (Stirnseite 18) mit einer Breite b (siehe Figur 1) und eine Schmalseite 20 mit einer Tiefe t aufweist (siehe Figur 3 und Figur 4).

Die Breitseite 18 bzw. Stirnseite 18 kann z.B. bedruckt werden.

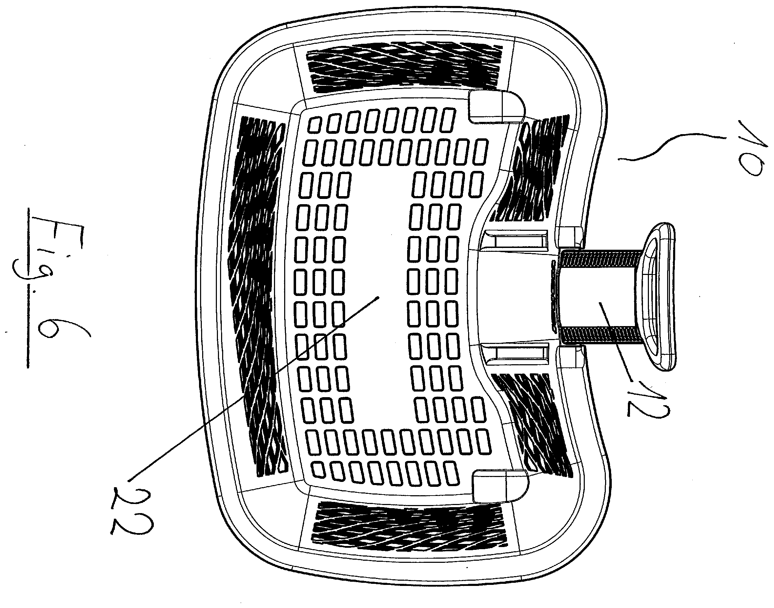

Der Einkaufskorb 10 weist selbst einen Boden 22 (siehe Figur 6) auf sowie eine an den Boden 22 anschließende umlaufende Seitenwandung 24. Der Boden 22 und die Seitenwandung 24 schließen einen Innenbereich 26 des Einkaufskorbs 10 ein.

Der Innenbereich 26 selbst ist über eine Öffnung 28, die auf der der entgegengesetzten Seite des Bodens 22 durch den Rand 30 der Seitenwandung 24 begrenzt ist, zugänglich.

Die Seitenwandung 24 und auch der Boden 22 sind mit Gitterstrukturen 32 versehen. Grundsätzlich ist aber auch denkbar, dass die Seitenwandung 24 und/oder der Boden 22 geschlossen sind.

Im Boden 22 sind an einer Längsseite des Bodens 22 Rollen 34 befestigt. Auf der gegenüberliegenden Längsseite des Bodens 22 sind Stützrippen 36 vorgesehen.

Im Abstellzustand steht der Einkaufskorb 10 auf den Rollen 34 und den Stützrippen 36, während er im Fahrzustand über die Rollen 34 rollbar ist.

Im Bereich der Seitenwandung 24, nämlich in diesem Ausführungsbeispiel im Rand 30 der Seitenwandung 24 auf der Seite des Einkaufskorbs 10, auf der auch die Rollen 34 angeordnet sind, auch Rückseite des Einkaufskorbs 10 genannt, ist ein Führungstunnel 37 für die Führung und wenigstens teilweisen Aufnahme der Führungsschiene 14 des Ziehgriffs 12 vorgesehen.

In dem in Figur 1 gezeigten Ausführungsbeispiel sind sämtliche Bestandteile des Einkaufskorbs 10 aus Kunststoff ausgeführt, mit Ausnahme der Achse (nicht näher dargestellt) für die Rollen 34 des Einkaufskorbs 10. Diese Achse kann beispielsweise aus Stahl ausgeführt sein.

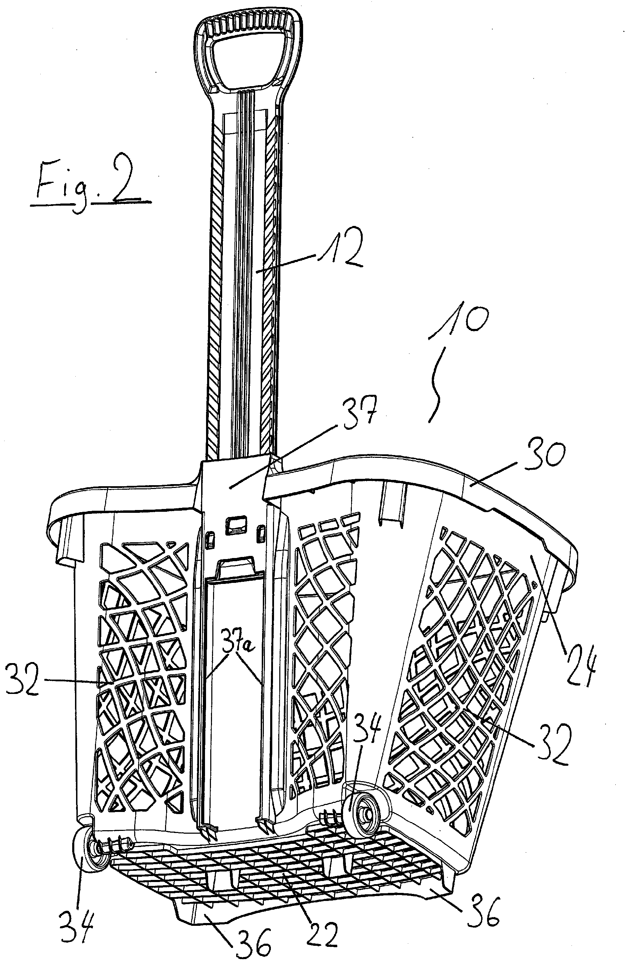

Wie weiter aus Figur 2 ersichtlich, ist der Führungstunnel 37 auf der Außenseite der Rückseite der Seitenwandung 24 angeordnet und befindet sich dort im oberen Drittel bzw. Viertel der Rückseite der Seitenwandung 24. Die Länge des Führungstunnels 37 beträgt ca. ein Fünftel bis ca. ein Viertel der Höhe der Seitenwandung 24.

An das dem Boden 22 zugewandte Ende des Führungstunnels 37 schließen sich zu beiden Schmalseiten des Führungstunnels Führungsrippen 37a an, die zur Führung der Führungsschiene 14 dienen.

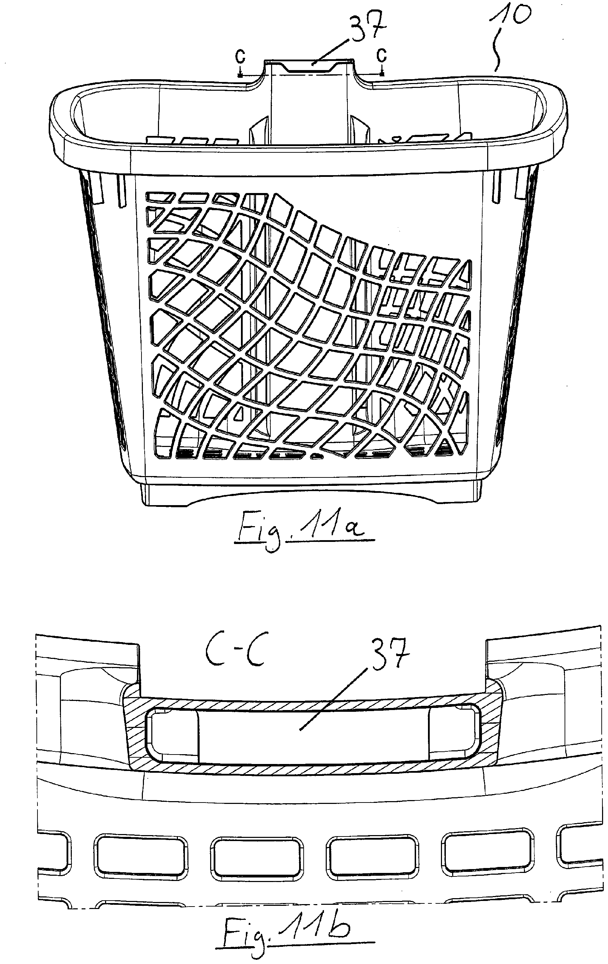

Der Querschnitt des Führungstunnels 37 ist in Figur 11b ersichtlich (Schnittangabe Schnitt C-C siehe Figur 11a).

Der Querschnitt des Führungstunnels 37 hat eine leicht gebogene bzw. konvexe Form.

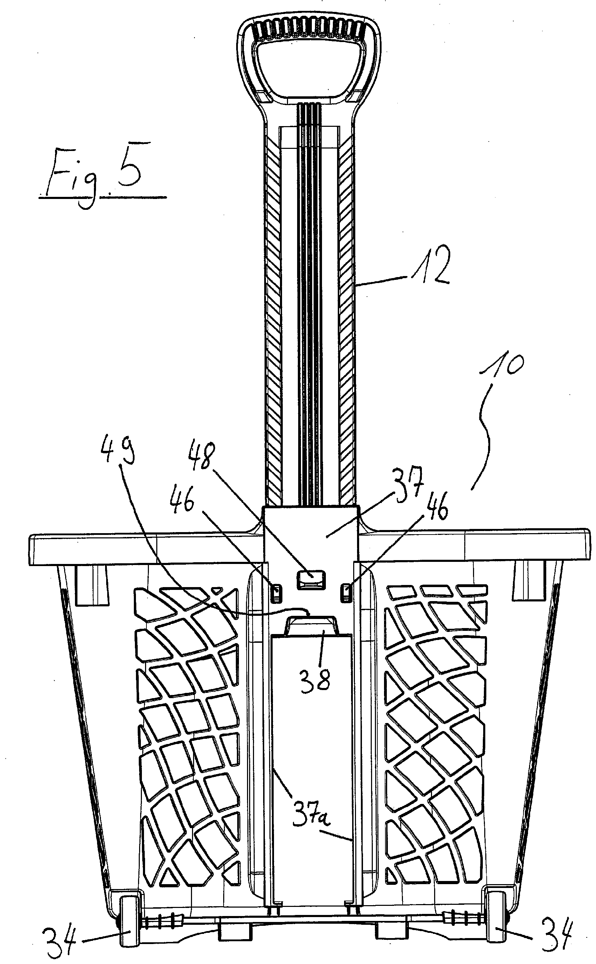

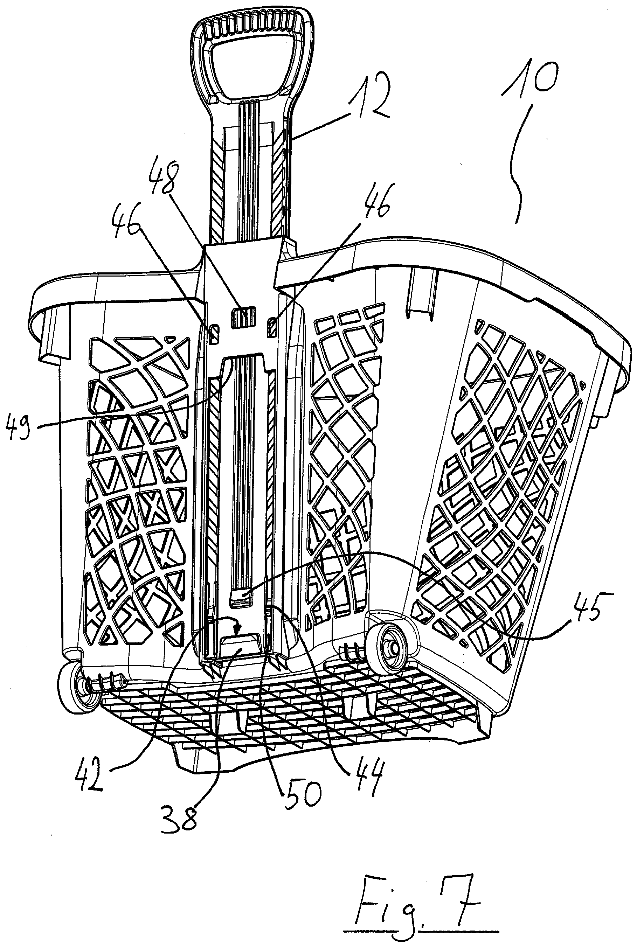

Die Führungsschiene 14 weist an ihrem im montierten Zustand dem Boden 22 zugewandtem Ende (bzw. an ihrem dem Handgriff 16 abgewandten Ende) ein keilförmiges Rastelement 38 (siehe z.B. Figur 5 und Figur 7) auf, dass sich schräg aus der Breitseite 18 der Führungsschiene 14 erhebt, und zwar derart, dass die höchste Erhebung des Rastelements 38 dem Handgriff 16 zugewandt ist und dort einen Rastansatz 42 ausbildet. An dem dem Handgriff 16 abgewandten Ende des Rastelements 38 läuft die Schrägfläche des Rastelements 38 in die Oberfläche der Führungsschiene.

Des Weiteren weist die Führungsschiene 14 Einrastelemente 44, 45 auf.

Die Einrastelemente 44 sind gefederte Einrastelemente 44, die jeweils mittig auf einem Federsteg 50 angeordnet sind.

Weiter ist ein mittig auf der Breitseite der Führungsschiene 14 angeordnetes, ungefedertes Einrastelement 45 vorgesehen.

Als Gegenstücke für die Einrastelemente 44, 45 weist der Führungstunnel 37 Ausnehmungen 46, 48 auf, in denen die Einrastelemente 44, 45 verrastbar sind.

Außerdem weist der Führungstunnel 37 als Gegenstück bzw. als Anschlag für das Rastelement 38 eine Ausformung 49 auf, an der das Rastelement 38 anschlagbar ist.

Die Funktion des Rastelements 38 lässt sich wie folgt beschreiben:
Beim Einsetzen des Ziehgriffs 12 drückt das Rastelement 38 die außenliegende Wand des Führungstunnels 37 nach außen, so dass die Führungsschiene 14 und das Rastelement 38, die einen größeren Querschnitt aufweisen als der Öffnungsquerschnitt des Führungstunnels 37 durch den Führungstunnel 37 hindurchtreten können.

Nach dem Hindurchtreten des Rastelements 38 springt die nach außen gedrückte Wand des Führungstunnels 37 wieder zurück und so wird im montierten Zustand des Ziehgriffs 12 ein vollständiges Herausziehen der Führungsschiene 14 aus dem Führungstunnel 37 verhindert.

Wird nämlich im montierten Zustand die Führungsschiene 14 durch Herausziehen des Ziehgriffs 12 aus dem Führungstunnel 37 gegen den Führungstunnel 37 gezogen, so stößt das Rastelement 38 gegen die Ausformung 49 des Führungstunnels 37 und verhindert ein vollständiges Herausziehen des Ziehgriffs 12.

Das Rastelement 38 ist im Kontaktbereich mit einer zur Ausformung 49 parallelen Fläche, welche keilförmig ausgestaltet ist, versehen. Dadurch kann eine zusätzliche Klemmwirkung erzielt werden, so dass die Ziehkräfte am Ziehgriff 12 erhöht werden können, so dass Ziehgriff 12 und Führungstunnel 37 noch besser miteinander verklemmt werden können.

In dieser ausgezogenen Position (Auszugsposition, siehe z.B. Figur 5) wird über die Einrastelemente 44, 45 der Ziehgriff 12 in den Ausnehmungen 46, 48 verrastet, so dass die Führungsschiene 14 stabil in dieser Position auch gegen unbeabsichtigtes erneutes Einschieben in den Führungstunnel 37 gesichert bzw. verrastet ist. Für ein erneutes Einschieben muss der Federwiderstand der beiden Federstege 50 sowie der Federwiderstand der konvexen Außenwand des Führungstunnels 37, da hier das Rastelement 45 in der Ausnehmung 48 verrastet ist, überwunden werden.

Die gebogene bzw. konvexe Form des Querschnitts des Führungstunnels 37 führt dazu, dass die Wand des Führungstunnels 37 mit den Ausnehmungen 46, 48, auch Rückwand des Führungstunnels 37 genannt, wie eine Blattfeder wirkt. Dies ist besonders vorteilhaft für die Realisierung des Rast- und Schnappsystems des Einkaufskorbs 10.

Dadurch kann der Einkaufskorb 10 nicht nur gezogen, sondern auch geschoben werden.

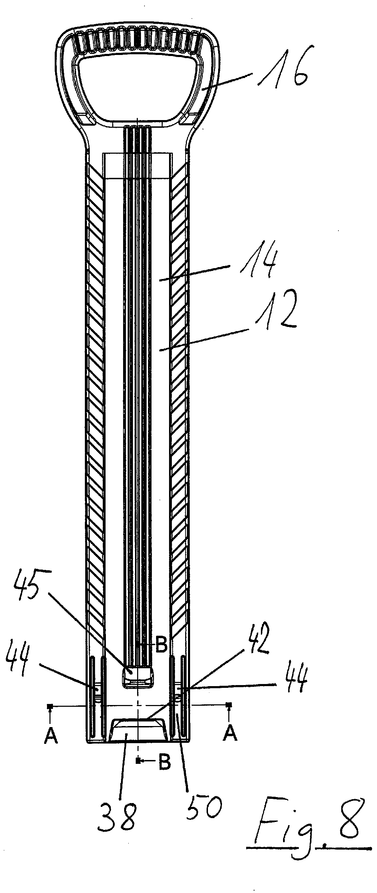

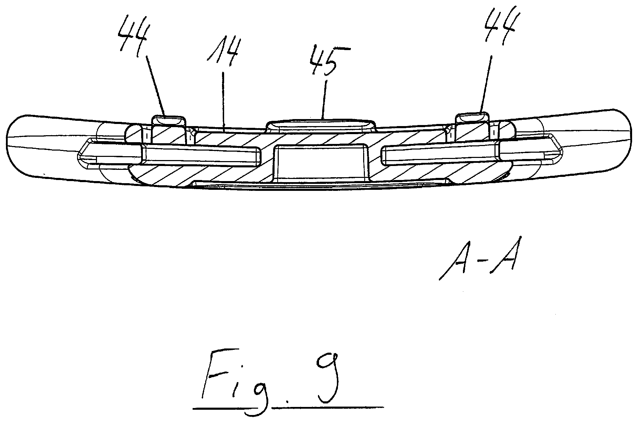

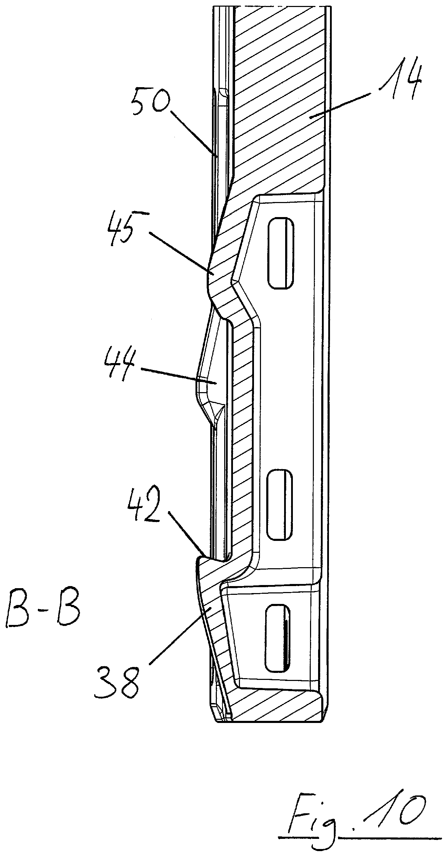

In den Figuren 2 bis 11 sind weitere Ansichten auf den Einkaufskorb 10 wie vorstehend beschrieben ersichtlich. Die Schnittdarstellung gemäß Figur 4 sowie die Darstellung der Schnitte A-A sowie B-B (Schnittangabe siehe Figur 8) in den Figuren 9 und 10 zeigt im Detail, wie das Rastelement 38 sowie die Einrastelemente 44, 45 aufgebaut sind.

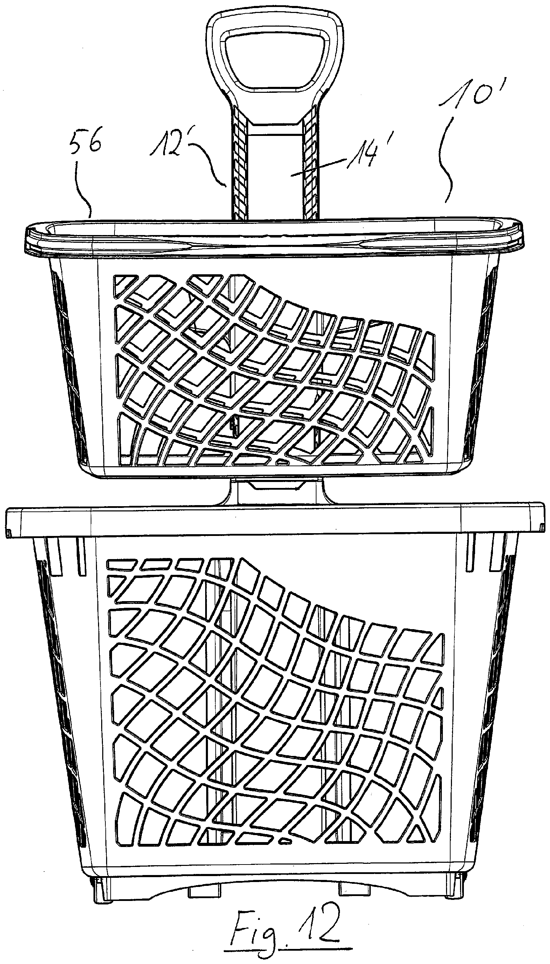

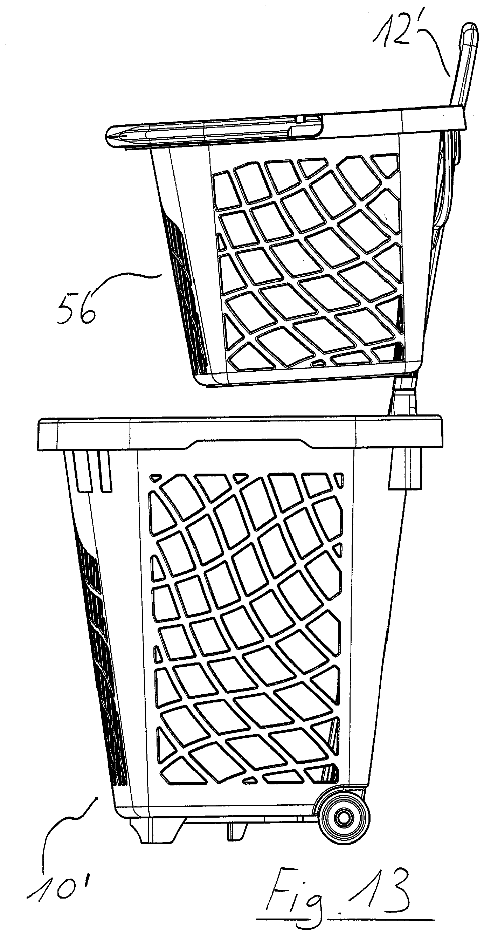

In den Figuren 12 bis 16 ist ein weiteres Ausführungsbeispiel eines erfindungsgemäßen Einkaufskorbs 10' gezeigt, der sämtliche strukturellen und funktionalen Merkmale des Einkaufskorbs 10 aufweist sowie deren Vorteile.

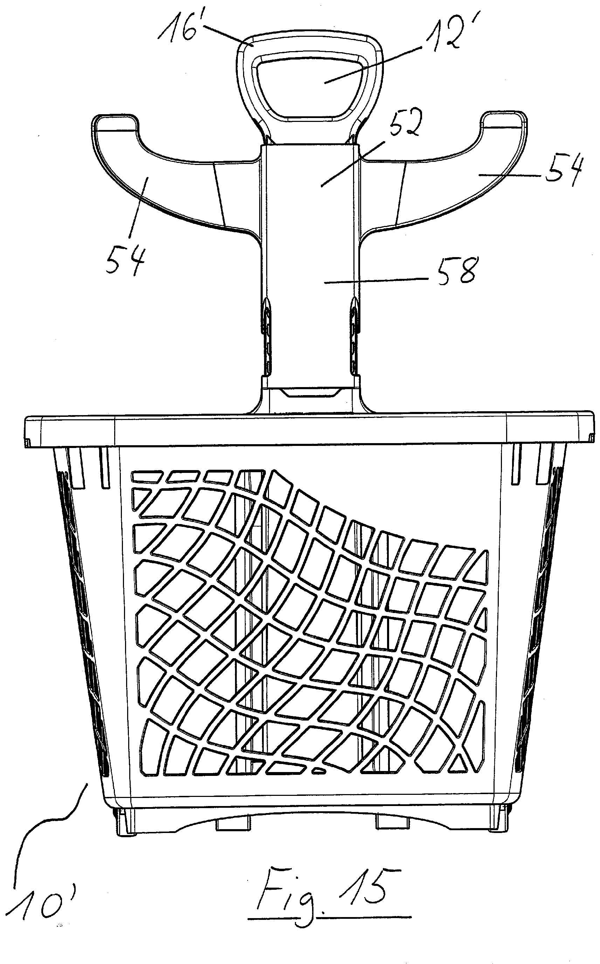

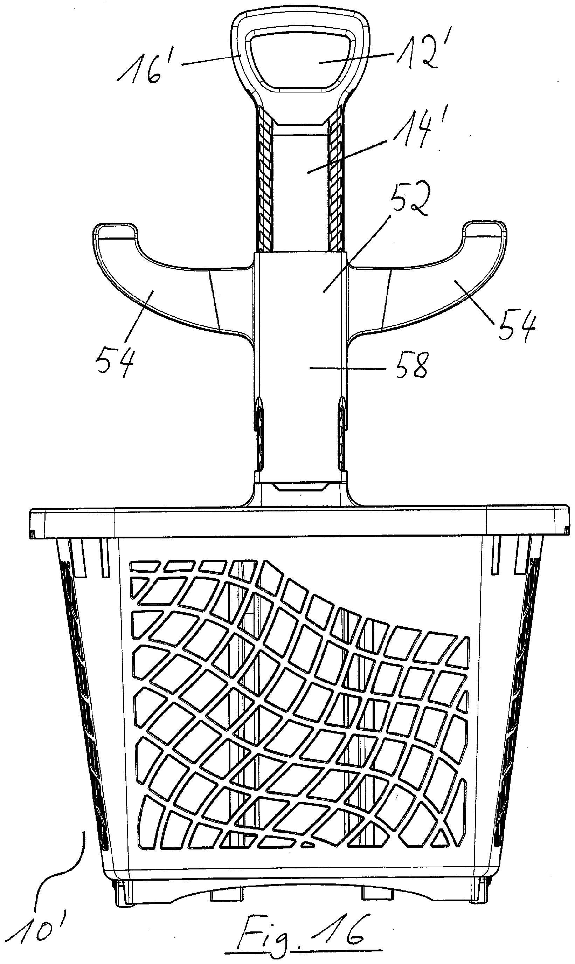

Darüber hinaus weist der Einkaufskorb 10' einen auf dem Ziehgriff 12' aufgefädelten Aufsatz 52 auf, der wie beispielsweise aus den Figuren 15 und 16 ersichtlich, zwei Tragarme 54 aufweist, auf denen ein Zusatzkorb 56 gehalten werden kann.

Der Aufsatz 52 ist mit einem Aufsatzführungstunnel 58 auf der Führungsschiene 14' des Ziehgriffs 12' geführt.

Insbesondere verhält es sich so, dass die Führungsschiene 14' durch den Führungstunnel 58 hindurchgeführt ist.

Wie aus Figur 15 ersichtlich ist, ist im versenkten Zustand des Ziehgriffes 12' der Handgriff 16' bis auf den Eingang des Aufsatzführungstunnels 58 heruntergefahren und sitzt auf dessen Rand auf.

Wie weiter aus Figur 16 ersichtlich ist, ist im herausgezogenen Zustand der Ziehgriff 12' sowohl aus dem Führungstunnel 37' als auch aus dem Aufsatzführungstunnel 58 herausgezogen.

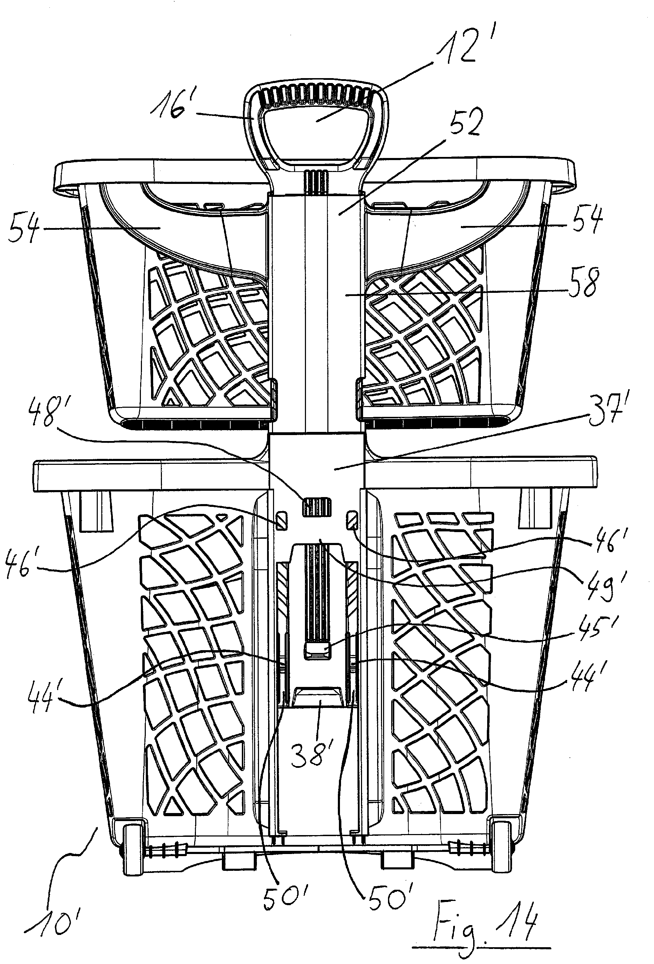

In dem in Figur 16 gezeigten Zustand ist das Rastelement 38' (vgl. Figur 14) analog dem in Figur 5 gezeigten Zustand gegen die Ausformung 49' des Führungstunnels 37' angeschlagen und verhindert ein vollständiges Herausziehen des Ziehgriffs 12'.

In dieser ausgezogenen Position (Auszugsposition) sind die Einrastelemente 44,' 45' des Ziehgriffs 12' in den Ausnehmungen 46', 48' verrastet, so dass die Führungsschiene 14' stabil in dieser Position auch gegen unbeabsichtigtes erneutes Einschieben in den Führungstunnel 37' gesichert bzw. verrastet ist. Für ein erneutes Einschieben muss der Federwiderstand der beiden Federstege 50' sowie der Federwiderstand der konvexen Außenwand des Führungstunnels 37', da hier das Rastelement 45' in der Ausnehmung 48' verrastet ist, überwunden werden.

Somit ist es auch in dem in Figur 16 gezeigten Zustand möglich, den Einkaufskorb 10' nicht nur zu ziehen, sondern auch schieben zu können.

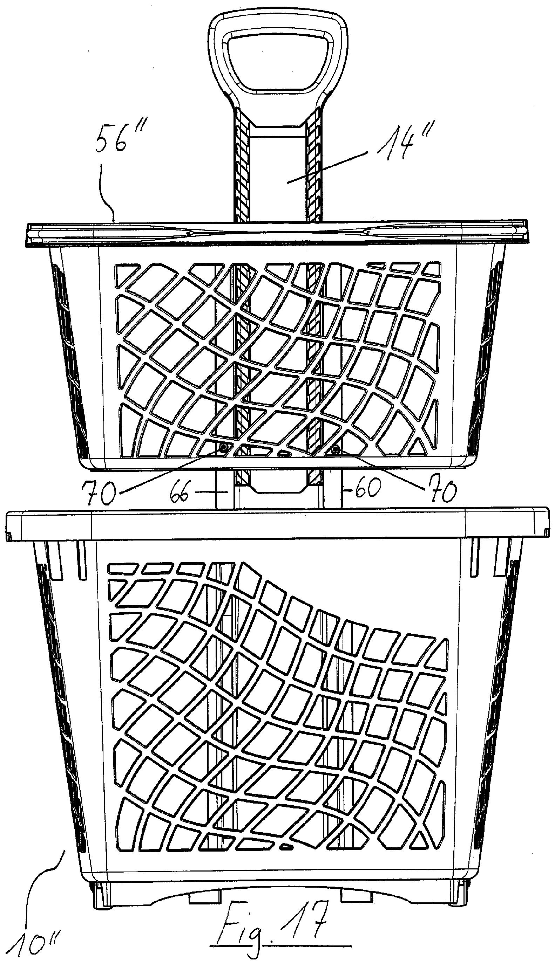

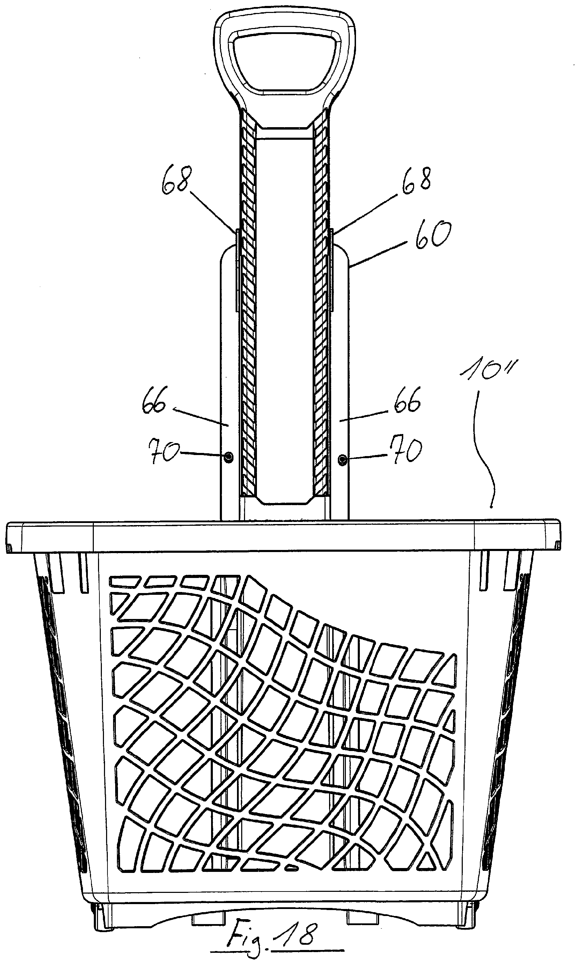

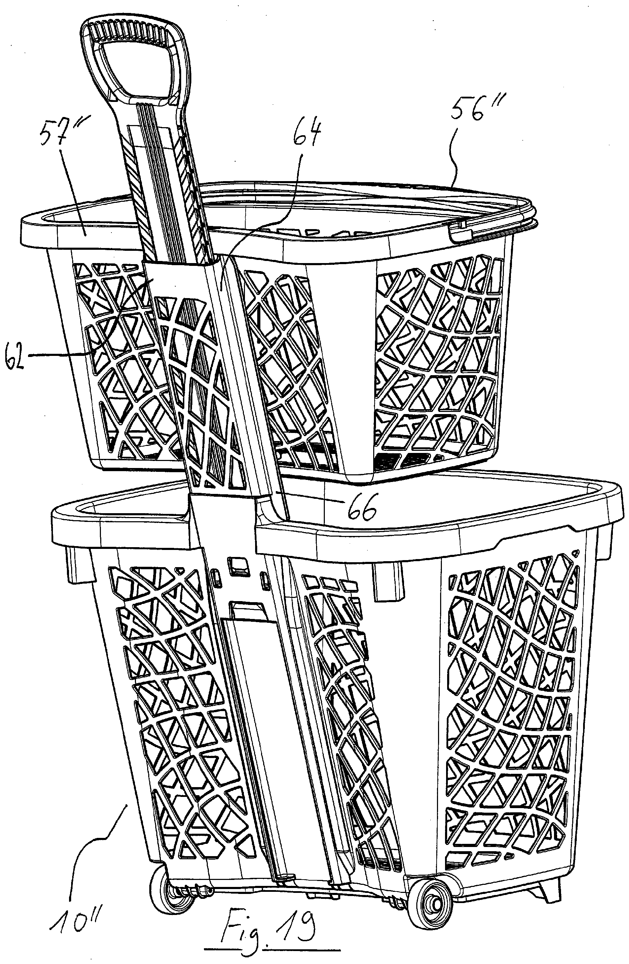

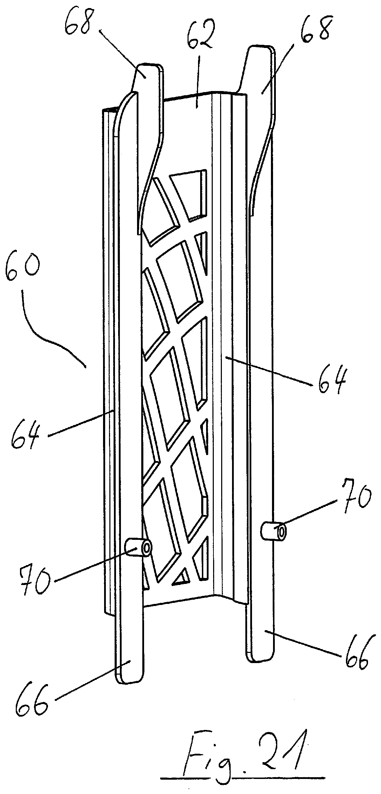

In den Figuren 17 bis 21 ist eine weitere Ausführungsform eines erfindungsgemäßen Behältnisses 10" gezeigt, das sämtliche strukturellen und funktionalen Merkmale sowie die damit verbundenen Vorteile aufweist wie das in den Figuren 1 bis 11b beschriebene Ausführungsbeispiel.

Zusätzlich sind jedoch eine Aufsatzschiene 60 zum Aufsatz auf die Führungsschiene 14" und ein Zusatzkorb 56" vorgesehen.

Der Zusatzkorb 56" ist identisch mit dem Zusatzkorb 56, wie er in Verbindung mit dem in den Figuren 12 bis 16 gezeigten Ausführungsbeispiel ersichtlich ist.

Mit anderen Worten ist es also möglich, den Zusatzkorb 56 auch im Zusammenhang mit der in den Figuren 17 bis 21 gezeigten Ausführungsform zu verwenden (und umgekehrt).

Die Aufsatzschiene 60 weist einen Mittelsteg 62 auf, der im Wesentlichen die Breite b der Führungsschiene 14" hat.

An beiden Längsseiten des Mittelstegs erhebt sich jeweils ein Seitensteg 64. Der Mittelsteg 62 und die Seitenstege 64 bilden ein C-förmiges Profil aus.

An jedem der Seitenstege 64 ist jeweils ein Führungsflügel 66 vorgesehen, der zum zusätzlichen Abstützen des Zusatzkorbes 56" dienen kann.

Die Aufsatzschiene 60 ist auf die Führungsschiene 14" aufklipsbar und in der in Figur 17 gezeigten Konfiguration auf die ausgezogene Führungsschiene 14" aufgeklipst. Dabei umgreifen der Mittelsteg 62 und die Seitenstege 64 die Führungsschiene 14".

Ferner weisen die Seitenstege 64 auf einer Seite jeweils einen Aufsatzzapfen 68 auf, auf den der Zusatzkorb 56" mit seinem Randprofil 57" aufgesetzt bzw. eingehängt werden kann.

Außerdem sind Führungszapfen 70 vorgesehen, wobei auf jedem Führungsflügel 66 im von dem Aufsatzzapfen 68 abgewandten Teil des Führungsflügels 66 jeweils ein Führungszapfen 70 vorgesehen ist. Diese Führungszapfen 70 treten durch die Gitterstrukturen des Zusatzkorbs 56" hindurch und stabilisieren dadurch den auf den Aufsatzzapfen 68 aufgehängten Zusatzkorb 56".

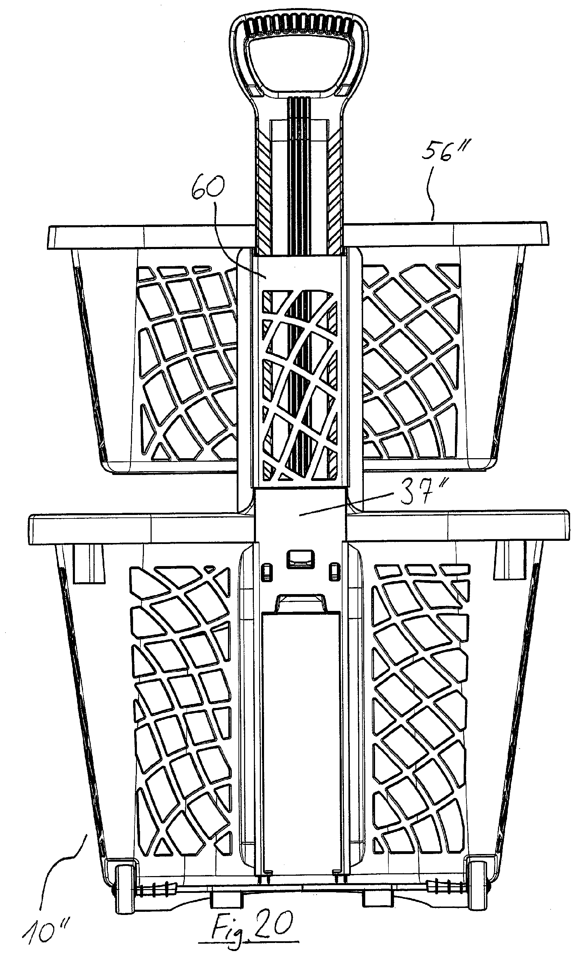

Die untere Kante der Aufsatzschiene 60 sitzt direkt auf der oberen Kante des Führungstunnels 37" auf (vgl. Figur 20), so dass hierüber die Gewichtskraft des Zusatzkorbs 56" in den Einkaufskorb 10" eingeleitet werden kann.

## Patentansprüche

1. Behältnis (10; 10'; 10"), insbesondere Einkaufskorb (10; 10'; 10"), mit einem Boden (22) und einer an den Boden (22) anschließenden umlaufenden Seitenwandung (24), wobei Boden (22) und Seitenwandung (24) einen Innenbereich (26) des Behältnisses (10; 10'; 10") begrenzen, wobei das Behältnis (10; 10'; 10") rollbar ausgeführt ist, wobei das Behältnis (10; 10'; 10") weiter einen Ziehgriff (12; 12') mit einer Führungsschiene (14; 14'; 14") und einem Handgriff (16; 16') aufweist und wobei in einem Bereich der Seitenwandung (24) ein Führungstunnel (37; 37'; 37") für die Führung und wenigstens teilweisen Aufnahme der Führungsschiene (14; 14'; 14") des Ziehgriffs (12; 12') vorgesehen ist, und wobei die Führungsschiene (14; 14'; 14") wenigstens ein Rastelement (38, 38') aufweist, das sich aus einer Außenfläche der Führungsschiene (14; 14'; 14") heraus erhebt, auf einer Breitseite (18) angeordnet ist und im montierten Zustand des Ziehgriffs (12; 12') ein vollständiges Herausziehen der Führungsschiene (14; 14'; 14") aus dem Führungstunnel (37; 37'; 37") verhindert, **dadurch gekennzeichnet, dass** der Führungstunnel (37, 37',37") einen Querschnitt mit einer gebogenen bzw. konvexen Form aufweist,
dass außerdem auf der Führungsschiene (14; 14'; 14") wenigstens ein Einrastelement (44, 45; 44', 45') vorgesehen ist, mittels dessen der Ziehgriff (12; 12') im montierten Zustand des Einkaufskorbs (10; 10'; 10") in einer ausgezogenen Position einrastbar ist, und, dass der Führungstunnel (37; 37'; 37") wenigstens eine Ausnehmung (46, 48; 46', 48') aufweist, in der das Einrastelement (44, 45; 44', 45') verrastbar ist.

2. Behältnis (10; 10'; 10") nach Anspruch 1, **dadurch gekennzeichnet, dass** die Führungsschiene (14; 14'; 14") einstückig ausgeführt ist.

3. Behältnis (10; 10'; 10") nach Anspruch 1 oder Anspruch 2, **dadurch gekennzeichnet, dass** der Ziehgriff (12; 12') einstückig ausgeführt ist.

4. Behältnis (10; 10'; 10") nach Anspruch 1 oder Anspruch 2, **dadurch gekennzeichnet, dass** der Ziehgriff (12; 12') und die Führungsschiene (14; 14'; 14") jeweils gesonderte Bauteile sind.

5. Behältnis (10; 10'; 10") nach einem der vorhergehenden Ansprüche, **dadurch gekennzeichnet, dass** das Behältnis (10; 10'; 10") aus Polypropylen (PP), insbesondere unverstärktem Polypropylen (PP) ausgebildet ist.

6. Behältnis (10; 10'; 10") nach einem der vorhergehenden Ansprüche, **dadurch gekennzeichnet, dass** das Behältnis (10; 10'; 10") als Spritzgussteil ausgebildet ist.

7. Behältnis (10; 10'; 10") nach einem der vorhergehenden Ansprüche, **dadurch gekennzeichnet, dass** der Handgriff (16; 16') oder der Ziehgriff (12; 12') aus faserverstärktem Kunststoff besteht.

8. Behältnis (10; 10'; 10") nach einem der vorhergehenden Ansprüche, **dadurch gekennzeichnet, dass** das Rastelement (38; 38') einstückig ausgebildet ist.

9. Behältnis (10; 10'; 10") nach einem der vorhergehenden Ansprüche, **dadurch gekennzeichnet, dass** das Rastelement (38; 38') keilförmig ausgebildet ist.

10. Behältnis (10; 10'; 10") nach einem der vorhergehenden Ansprüche, **dadurch gekennzeichnet, dass** die Führungsschiene (14; 14'; 14") zwei Breitseiten (18) mit einer Breite (b) aufweist, die wenigstens doppelt so groß wie die Tiefe der Führungsschiene (14; 14'; 14") ist.

11. Behältnis (10; 10'; 10") nach Anspruch 10, **dadurch gekennzeichnet, dass** das wenigstens eine Einrastelement (44; 44') gefedert angeordnet ist, insbesondere auf einem Federsteg (50; 50') angeordnet ist.

12. Behältnis (10; 10'; 10") nach Anspruch 11, **dadurch gekennzeichnet, dass** wenigstens ein weiteres Einrastelement (45; 45') vorgesehen ist, dass ungefedert auf der Führungsschiene (14; 14'; 14") angeordnet ist.

13. Behältnis (10; 10'; 10") nach einem der vorhergehenden Ansprüche, **dadurch gekennzeichnet, dass** der Führungstunnel (37; 37'; 37") wenigstens eine Ausformung (49; 49') aufweist, in der das Rastelement (38; 38') anschlagbar ist.

14. Behältnis (10') nach einem der vorhergehenden Ansprüche, **dadurch gekennzeichnet, dass** weiter ein auf den Ziehgriff (12') auffädelbarer Aufsatz (52) vorgesehen ist, mittels dessen ein Zusatzkorb (56) gehalten werden kann.

15. Behältnis (10") nach einem der Ansprüche 1 bis 13, **dadurch gekennzeichnet, dass** weiter eine auf die Führungsschiene (14") aufklipsbare Aufsatzschiene (60) vorgesehen ist, mittels derer ein Zusatzkorb (56") gehalten werden kann.

## Claims

1. A receptacle (10; 10'; 10"), in particular a shopping basket (10; 10'; 10"), having a bottom (22) and an encircling lateral wall (24) adjoining the bottom (22), wherein bottom (22) and lateral wall (24) bound an inner region (26) of the receptacle (10; 10'; 10"), wherein the receptacle (10; 10'; 10") is rollable, wherein the receptacle (10; 10'; 10") furthermore has a pulling handle (12; 12') with a guiding rail (14; 14'; 14") and a hand grip (16; 16') and wherein a guide tunnel (37; 37'; 37") for the guiding and at least partial receiving of the guiding rail (14; 14'; 14") of the pulling handle (12; 12') is provided in a region of the lateral wall (24), and wherein the guiding rail (14; 14'; 14") has at least one locking element (38, 38') which extends upwards from an outer surface of the guiding rail (14; 14'; 14"), is arranged on a long side (18) and in the mounted state of the pulling handle (12; 12') prevents the guiding rail (14; 14'; 14") from being pulled completely out of the guide tunnel (37; 37'; 37"), **characterised in that** the guide tunnel (37, 37', 37") has a cross-section with a curved or convex form,
**in that** in addition on the guiding rail (14; 14'; 14") there is provided at least one engagement element (44, 45; 44', 45') by means of which the pulling handle (12; 12') is engageable in a pulled-out position in the mounted state of the shopping basket (10; 10'; 10"),
and **in that** the guide tunnel (37; 37'; 37") has at least one opening (46, 48; 46', 48') in which the engagement element (44, 45; 44', 45') is lockable.

2. A receptacle (10; 10'; 10") according to claim 1, **characterised in that** the guiding rail (14; 14'; 14") is single-piece.

3. A receptacle (10; 10'; 10") according to claim 1 or claim 2, **characterised in that** the pulling handle (12; 12') is single-piece.

4. A receptacle (10; 10'; 10") according to claim 1 or claim 2, **characterised in that** the pulling handle (12; 12') and the guiding rail (14; 14'; 14") are each separate component parts.

5. A receptacle (10; 10'; 10") according to any one of the preceding claims, **characterised in that** the receptacle (10; 10'; 10") is made of polypropylene (PP), in particular unreinforced polypropylene (PP).

6. A receptacle (10; 10'; 10") according to any one of the preceding claims, **characterised in that** the receptacle (10; 10'; 10") is an injection moulded part.

7. A receptacle (10; 10'; 10") according to any one of the preceding claims, **characterised in that** the hand grip (16; 16') or the pulling handle (12; 12') is composed of fibre-reinforced plastics material.

8. A receptacle (10; 10'; 10") according to any one of the preceding claims, **characterised in that** the locking element (38; 38') is single-piece.

9. A receptacle (10; 10'; 10") according to any one of the preceding claims, **characterised in that** the locking element (38; 38') is wedge-shaped.

10. A receptacle (10; 10'; 10") according to any one of the preceding claims, **characterised in that** the guiding rail (14; 14'; 14") has two long sides (18) with a width (b) which is at least twice as great as the depth of the guiding rail (14; 14'; 14").

11. A receptacle (10; 10'; 10") according to claim 10, **characterised in that** the at least one engagement element (44; 44') is arranged with spring loading, in particular is arranged on a spring limb (50; 50').

12. A receptacle (10; 10'; 10") according to claim 11, **characterised in that** at least one further engagement element (45; 45') is provided and is arranged on the guiding rail (14; 14'; 14") without spring loading.

13. A receptacle (10; 10'; 10") according to any one of the preceding claims, **characterised in that** the guide tunnel (37; 37'; 37") has at least one formation (49; 49') in which the locking element (38; 38') can abut.

14. A receptacle (10') according to any one of the preceding claims, **characterised in that** furthermore there is provided an attachment (52), slideable onto the pulling handle (12'), by means of which there can be held an additional basket (56).

15. A receptacle (10") according to any one of claims 1 to 13, **characterised in that** furthermore there is provided an attachment rail (60), clippable onto the guiding rail (14"), by means of which there can be held an additional basket (56").

## Revendications

1. Conteneur (10; 10'; 10"), en particulier panier d'achat (10; 10'; 10"), avec un fond (22) et une paroi latérale périphérique (24) se raccordant au fond (22), dans lequel le fond (22) et la paroi latérale (24) délimitent une région intérieure (26) du conteneur (10; 10'; 10"), dans lequel le conteneur (10; 10'; 10") est réalisé sous forme roulante, dans lequel le conteneur (10; 10'; 10") présente en outre un manche de traction (12; 12') avec un rail de guidage (14; 14'; 14") et une poignée (16; 16') et dans lequel il est prévu dans une région de la paroi latérale (24) un tunnel de guidage (37; 37'; 37") pour le guidage et le logement au moins partiel du rail de guidage (14; 14'; 14") du manche de traction (12; 12'), et dans lequel le rail de guidage (14; 14'; 14") présente au moins un élément d'encliquetage (38, 38'), qui est en saillie sur une face extérieure du rail de guidage (14; 14', 14"), est disposé sur une face large (18) et empêche, dans l'état monté du manche de traction (12; 12'), une extraction totale du rail de guidage (14; 14'; 14") hors du tunnel de guidage (37; 37'; 37"), **caractérisé en ce que** le tunnel de guidage (37; 37'; 37") présente une section transversale de forme cintrée ou convexe, **en ce qu'**il est en outre prévu sur le rail de guidage (14; 14'; 14") au moins un élément d'encliquetage (44, 45; 44', 45'), au moyen duquel le manche de traction (12; 12') peut, dans l'état monté du panier d'achat (10; 10'; 10"), être encliqueté dans une position étendue, et **en ce que** le tunnel de guidage (37; 37'; 37") présente au moins un évidement (46, 48; 46', 48'), dans lequel l'élément d'encliquetage (44, 45; 44', 45') peut être verrouillé.

2. Conteneur (10; 10'; 10") selon la revendication 1, **caractérisé en ce que** le rail de guidage (14; 14'; 14") est réalisé en une seule pièce.

3. Conteneur (10; 10'; 10") selon la revendication 1 ou la revendication 2, **caractérisé en ce que** le manche de traction (12; 12') est réalisé en une seule pièce.

4. Conteneur (10; 10'; 10") selon la revendication 1 ou la revendication 2, **caractérisé en ce que** le manche de traction (12; 12') et le rail de guidage (14; 14'; 14") sont respectivement des composants séparés.

5. Conteneur (10; 10'; 10") selon l'une quelconque des revendications précédentes, **caractérisé en ce que** le conteneur (10; 10'; 10") est réalisé en polypropylène (PP), en particulier en polypropylène non renforcé (PP).

6. Conteneur (10; 10'; 10") selon l'une quelconque des revendications précédentes, **caractérisé en ce que** le conteneur (10; 10'; 10") est réalisé sous la forme d'une pièce moulée par injection.

7. Conteneur (10; 10'; 10") selon l'une quelconque des revendications précédentes, **caractérisé en ce que** la poignée (16; 16') ou le manche de traction (12; 12') se compose de matière plastique renforcée par des fibres.

8. Conteneur (10; 10'; 10") selon l'une quelconque des revendications précédentes, **caractérisé en ce que** l'élément d'encliquetage (38; 38') est formé d'une seule pièce.

9. Conteneur (10; 10'; 10") selon l'une quelconque des revendications précédentes, **caractérisé en ce que** l'élément d'encliquetage (38; 38') est réalisé en forme de coin.

10. Conteneur (10; 10'; 10") selon l'une quelconque des revendications précédentes, **caractérisé en ce que** le rail de guidage (14; 14'; 14") présente deux faces larges (18) avec une largeur (b), qui est au moins deux fois plus grande que la profondeur du rail de guidage (14; 14'; 14").

11. Conteneur (10; 10'; 10") selon la revendication 10, **caractérisé en ce que** ledit au moins un élément d'encliquetage (44; 44') est monté sur ressort, en particulier est disposé sur une nervure à ressort (50; 50').

12. Conteneur (10; 10'; 10") selon la revendication 11, **caractérisé en ce qu'**il est prévu au moins un autre élément d'encliquetage (45; 45'), qui est monté sans ressort sur le rail de guidage (14; 14'; 14").

13. Conteneur (10; 10'; 10") selon l'une quelconque des revendications précédentes, **caractérisé en ce que** le tunnel de guidage (37; 37'; 37") présente au moins une déformation (49; 49'), dans laquelle l'élément d'encliquetage (38; 38') peut buter.

14. Conteneur (10') selon l'une quelconque des revendications précédentes, **caractérisé en ce qu'**il est en outre prévu un support (52) pouvant être enfilé sur le manche de traction (12'), au moyen duquel un panier d'appoint (56) peut être maintenu.

15. Conteneur (10") selon l'une quelconque des revendications 1 à 13, **caractérisé en ce qu'**il est en outre prévu un rail de support (60) pouvant être accroché au rail de guidage (14"), au moyen duquel un panier d'appoint (56") peut être maintenu.
